# DEMANDE DE BREVET EUROPEEN

(11) **EP 1 477 703 A2**
(43) Date de publication de la demande: **17.11.2004**
(21) Numéro de dépôt: 04010877.1
(22) Date de dépôt: 07.05.2004
(51) Int. Cl.: F16F 15/32

(54) **Masse d'équilibrage pour roue de véhicule**

(30) Priorité: 12.05.2003 CH 8182003
(71) Demandeur: Lucchesi Creations S.A., 1227 Les Acacias/Geneve (CH)
(72) Inventeur: Lucchesi, Ferdinando, 1233 Bernex (CH)
(74) Mandataire: Micheli & Cie

(57) **Abrégé**

La masse d'équilibrage pour roue de véhicule comporte une succession de masselottes (3) reliées les unes aux autres sur une partie seulement de leur épaisseur et/ou largeur et susceptibles d'être séparées manuellement les unes des autres. Cette succession de masselottes (3) est réalisée dans un matériau composite non toxique à base de matière plastique d'une densité comprise entre 20 et 120 g/cm³ et une couche autocollante (6) apposée sur la face arrière des masselottes (3) d'équilibrage et munie d'un ruban de protection (7) pelable sur sa face libre destinée à être collée contre une surface.

## Description

Pour équilibrer les roues de voitures ou de motocycles par exemple on utilise couramment des masselottes d'équilibrage en plomb ou en alliage de plomb et molybdène que l'on fixe à la jante de la roue par une bride déformable ou par un autocollant.

On connaît également les barrettes de masse d'équilibrage formées de plusieurs masselottes reliées les unes aux autres et pouvant être séparées à l'aide d'un outil.

L'inconvénient de ces masses d'équilibrage réside dans le fait de leur apparence; en effet elles s'oxydent rapidement et deviennent noires et salissantes. Par ailleurs, le fait de devoir utiliser un outil pour séparer les masselottes d'une barrette est également un inconvénient.

On connaît également du document WO 02/35114 une masse d'équilibrage comprenant plusieurs masselottes pouvant être séparées les unes des autres, par exemple manuellement et constituée d'une matière non oxydable et pouvant recevoir un traitement de surface tel qu'une peinture ou un thermolaquage.

L'inconvénient de ces masses d'équilibrage réside dans leur composition qui utilise une quantité non négligeable de plomb qu'il faut recycler pour son élimination ou sa réutilisation.

Le but de la présente invention est la réalisation d'une masse d'équilibrage formée de plusieurs masselottes séparables manuellement qui ne comporte plus de plomb dans sa composition.

La présente invention a pour objet une masse d'équilibrage qui se distingue par les caractéristiques énumérées à la revendication 1 ainsi que des formes d'exécution de celle-ci telle qu'énumérées dans les revendications dépendantes de la revendication 1.

L'invention a encore pour objet un mode de stockage et de présentation de la masse, particulièrement pratique pour l'usager.

Le dessin annexé illustre schématiquement et à titre d'exemple quelques formes d'exécution de la masse d'équilibrage selon l'invention et une forme de conditionnement de celle-ci.
La figure 1 est une vue de dessus de la masse d'équilibrage.
La figure 2 est une vue de côté de la masse d'équilibrage de la figure 1.
La figure 3 est une vue de dessus d'une seconde forme d'exécution de la masse d'équilibrage.
La figure 4 est une vue de dessus d'une troisième forme d'exécution de la masse d'équilibrage.
La figure 5 illustre un conditionnement de la masse d'équilibrage vue de côté.
La figure 6 illustre le conditionnement de la figure 5 vu de A.
La figure 7 est une vue de côté du conditionnement de la figure 5, la face latérale de celui-ci étant enlevée partiellement.
La figure 8 est une vue de dessus d'une quatrième forme d'exécution de la masse d'équilibrage.
La figure 9 illustre une masse d'équilibrage collée sur une face latérale d'une jante.
La figure 10 illustre la déformation que peuvent prendre les masses d'équilibrage illustrées aux figures 4 ou 8 pour être collées sur une face latérale d'une jante.

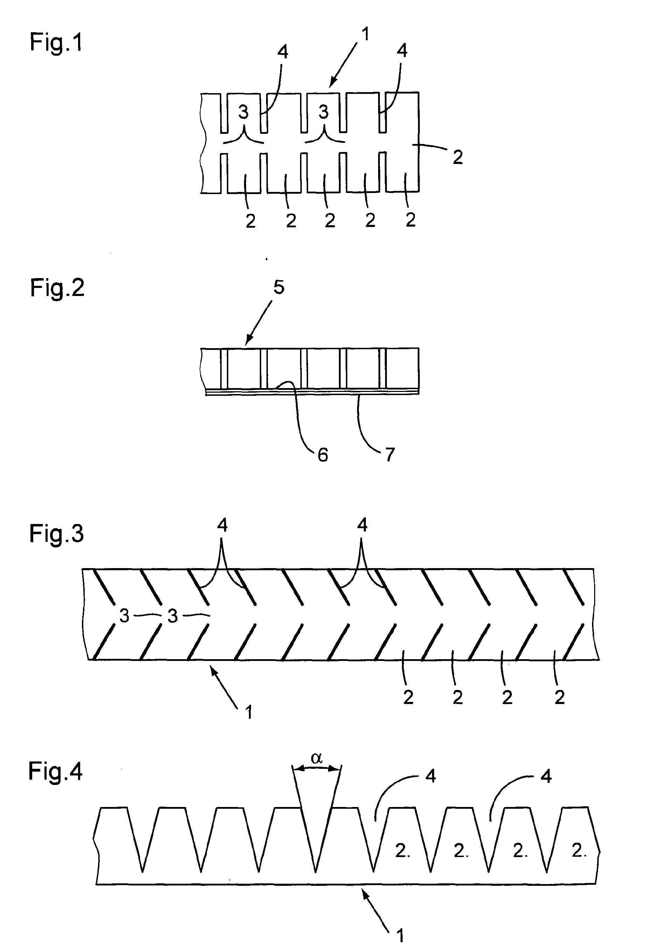

La masse d'équilibrage 1, illustrée aux figures 1 et 2, constitue une première forme d'exécution de la masse d'équilibrage selon l'invention. Cette masse 1 est réalisée dans une bande en matière composite non toxique à base de matière plastique d'une densité comprise entre 20 et 120 gr/cm³ prédécoupée ou formée par thermoformage de telle sorte qu'elle présente une succession de masselottes 2 reliées les unes aux autres sur une partie seulement 3 de leur épaisseur et/ou largeur de manière à être facilement détachables les unes des autres manuellement.

Dans cette exécution les prédécoupes 4 de la bande formant la masse d'équilibrage 1 sont constituées par des fentes perpendiculaires à l'axe longitudinal de la bande, débouchant sur chacun des côtés latéraux de cette bande et laissant une partie 3 médiane reliant deux masselottes 2 adjacentes.

La matière utilisée pour la réalisation de la masse d'équilibrage est un polymère contenant une charge de particules lourdes minérales ou métalliques, par exemple de cuivre ou de tungstène, présentant une certaine souplesse et élasticité permettant une incurvation ou un léger pliage de la bande moulée ou thermoformée.

La largeur de la masse d'équilibrage 1 est comprise de préférence entre 10 et 20 mm et son épaisseur entre 2 et 8 mm par exemple.

La largeur de la partie non découpée 3 située entre deux prédécoupes 4 se faisant face est comprise entre 1 et 5 mm par exemple.

La face inférieure de la masse d'équilibrage 1 est plane, elle est destinée à s'appliquer contre la jante d'une roue de véhicule. La face supérieure 5 de cette masse d'équilibrage 1 peut être également plane mais peut aussi présenter une forme particulière destinée à donner à l'ensemble de la masse d'équilibrage 1 ou à chacune des masselottes 2 un design particulier.

La face inférieure de la masse d'équilibrage est munie d'une couche autocollante 6 protégée par un ruban pelable 7. Cette couche autocollante et le ruban 7 peuvent être formés par un ruban adhésif double face dans certaines exécutions.

Le ruban pelable 7 et la couche autocollante 6 peuvent présenter les mêmes prédécoupes que la bande thermoplastique formant les masselottes 2, mais cela n'est pas nécessaire, cette couche 6 et ce ruban 7 pouvant être continu, ce qui n'empêche pas de pouvoir détacher manuellement les masselottes 2 les unes des autres.

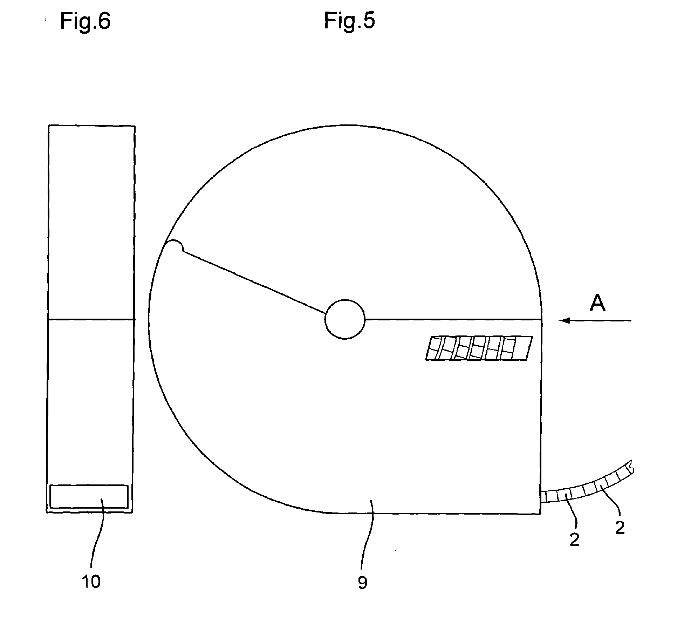

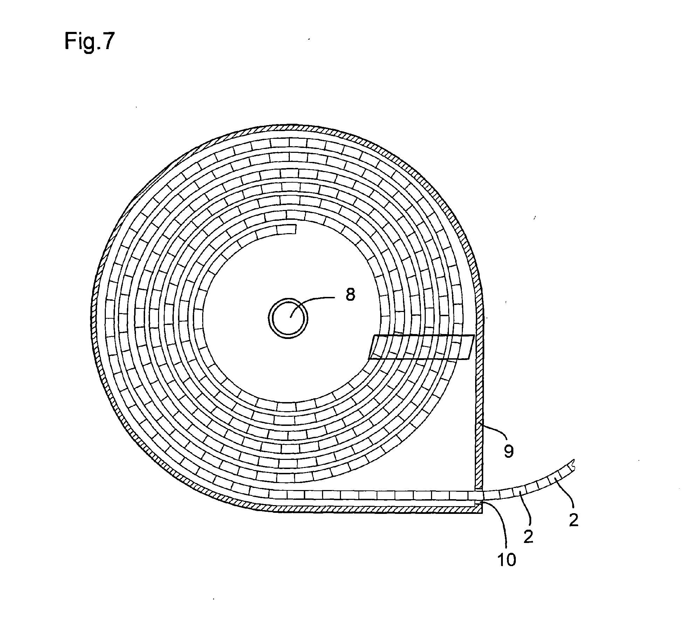

La masse d'équilibrage 1 peut comporter quelques masselottes 2, par exemple de 5 à 20 ou au contraire une multitude de masselottes 2, par exemple 200 à 1000. Dans le cas ou la masse d'équilibrage comporte une multitude de masselottes 2, son stockage peut se faire dans un distributeur tel qu'illustré aux figures 5 à 7. Du fait de la flexibilité de la masse d'équilibrage 1, celle-ci est enroulée sur un moyeu 8 et son extrémité émerge d'un récipient 9 par une fente 10. Une fenêtre 11 permet de visualiser la quantité restante de la masse d'équilibrage 1 logée dans le récipient 9.

Chaque masselotte 2 peut par exemple peser 5 gr. chacune. L'usager sachant le poids total nécessaire pour équilibrer une roue tire sur l'extrémité de la masse d'équilibrage 1 sortant du récipient 9 pour obtenir le nombre de masselottes 2 suffisant à faire le poids nécessaire puis il sépare ces quelques masselottes du reste de la masse d'équilibrage 1 par arrachement manuel.

L'usager enlève ensuite le ruban pelable 7 des quelques masselottes 2 qui viennent d'être séparées et colle celles-ci contre la jante de la roue à l'endroit adéquat. Ce type de masse d'équilibrage 1 est principalement prévu pour être apposé sur une partie périphérique circulaire de la jante car elle est flexible dans un plan perpendiculaire à son plan longitudinal et peut ainsi être incurvée pour former un arc de cylindre.

Ce nouveau type de masse d'équilibrage formé par un ensemble attenant de masselotte d'équilibrage unitaire 2 est très pratique car pour réaliser une masse d'un poids déterminé, il suffit de séparer une portion de cet ensemble correspondant au poids donné. Le collage de cette portion de masse d'équilibrage est aisée car elle est souple et flexible et peut s'adapter à la forme du support devant la recevoir.

De plus, la bande plastique formant la masse peut être colorée dans la masse et présenter une surface supérieure de forme permettant de réaliser des masses d'équilibrage esthétiques.

Enfin ces masses d'équilibrage exemptes de plomb sont non toxiques, non polluantes et recyclables.

Dans la seconde forme d'exécution de la masse d'équilibrage illustrée à la figure 3 les prédécoupes 4 sont plus étroites et disposées obliquement par rapport aux bord longitudinaux de la masse d'équilibrage, formant un angle compris entre 10 et 50° par rapport à ces bords. Ainsi, la forme des masselottes individuelles 2 ressemble à un chevron. Ce type de masse d'équilibrage est également prévu pour être collée sur une surface cylindrique de la jante d'une roue.

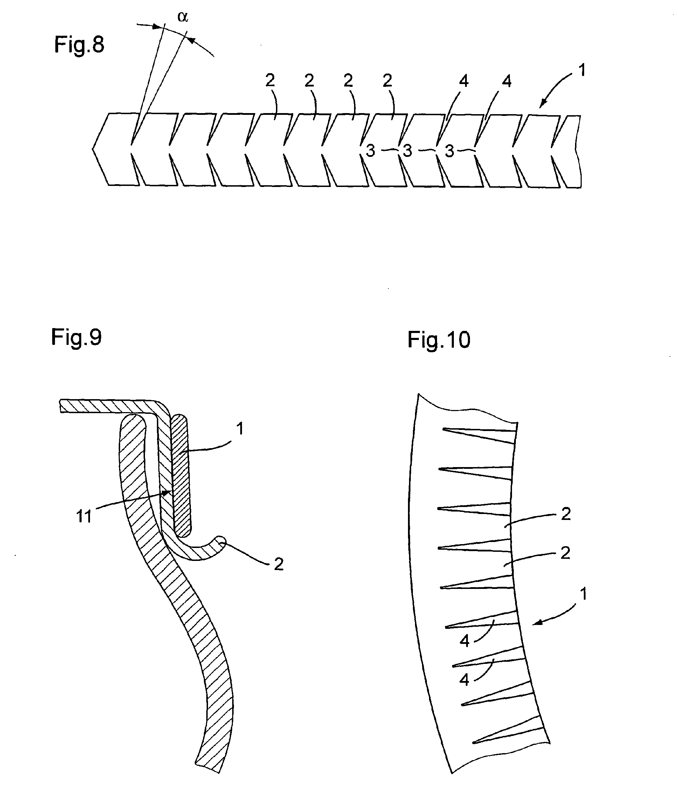

Dans la troisième forme d'exécution de la masse d'équilibrage illustrée à la figure 8 les prédécoupes 4 présentent vues en plan la forme de triangle ce qui permet à la masse d'être déformée dans son plan de manière à ce que son axe longitudinal épouse un arc de cercle. Ceci permet de coller ce type de masse d'équilibrage sur une surface circulaire latérale 11 de la jante 12 comme illustré à la figure 9.

L'angle d'ouverture α des prédécoupes 4 dans cette forme d'exécution peut être compris entre 5 et 30°.

Dans la quatrième forme d'exécution de la masse d'équilibrage illustrée à la figure 4 les prédécoupes 4 sont vues de dessus en forme de triangle d'un angle d'ouverture α de l'ordre de 5 à 30° mais ne débouchent que sur un des bords latéraux de la masse d'équilibrage.

Ainsi, du fait de la souplesse de la matière utilisée et des prédécoupes les masses d'équilibrage illustrées aux figures 1 et 3 peuvent être incurvées suivant une surface cylindrique, tandis que les masses d'équilibrage illustrées aux figures 4 et 8 peuvent être déformées dans leur plan pour s'incurver suivant un arc de cercle.

## Revendications

1. Masse d'équilibrage pour roue de véhicule, **caractérisée par le fait qu'**elle comporte une succession de masselottes reliées les unes aux autres sur une partie seulement de leur épaisseur et/ou largeur et susceptibles d'être séparées manuellement les unes des autres; cette succession de masselottes étant réalisée dans un matériau composite non toxique à base de matière plastique d'une densité comprise entre 20 et 120 g/cm³; une couche autocollante apposée sur la face arrière des masselottes d'équilibrage et munie d'un ruban de protection pelable sur sa face libre destinée à être collée contre une surface.

2. Masse d'équilibrage selon la revendication 1, **caractérisée par le fait que** sa matière est une matière thermoplastique chargée de particules lourdes dont la densité est de préférence comprise entre 40 et 85 g/cm³.

3. Masse d'équilibrage selon la revendication 2, **caractérisée par le fait que** les particules sont minérales ou métalliques.

4. Masse d'équilibrage selon l'une des revendications 1 à 3, **caractérisée par le fait que** la couche autocollante est réalisée par une bande continue autocollante double face collée sur la face arrière des masselottes.

5. Masse d'équilibrage selon la revendication 4, **caractérisée par le fait que** la bande autocollante et le ruban de protection comportent des prédécoupes s'étendant sur une partie seulement de la largeur de ladite bande et dudit ruban.

6. Masse d'équilibrage selon l'une des revendications précédentes, **caractérisée par le fait que** la matière plastique la constituant est souple et déformable.

7. Masse d'équilibrage selon l'une des revendications précédentes, **caractérisée par le fait que** les découpes séparant les masselottes individuelles s'étendent perpendiculairement à l'axe longitudinal de la masse d'équilibrage et débouchent chacune sur un seul bord de cette masse.

8. Masse d'équilibrage selon la revendication 7, **caractérisée par le fait que** vues en plan les découpes séparant les masselottes individuelles présentent la forme d'un triangle dont deux sommets sont situés sur un bord latéral de la masse d'équilibrage.

9. Masse d'équilibrage selon la revendication 7 ou 8, **caractérisée par le fait que** les découpes séparant les masselottes se font face deux à deux laissant une partie centrale plein entre elles.

10. Masse d'équilibrage selon les revendications 1 et/ou 6, **caractérisée par le fait qu'**elle comporte un nombre de masselottes supérieur à 50 enroulées sur elles-mêmes ou autour d'un moyeu pour leur stockage.

11. Emballage pour masse d'équilibrage selon l'une des revendications 1 à 10, **caractérisé par le fait qu'**il comporte un récipient muni d'un moyeu autour duquel est enroulé la succession de masselottes et d'une ouverture donnant passage à l'extrémité libre de la masse d'équilibrage, une portion de celle-ci pouvant être délivrée par simple traction sur cette extrémité libre.
